**Europäisches Patentamt**

**European Patent Office**

**Office européen des brevets**

(19)

(11) Veröffentlichungsnummer: **0 126 182**
**A1**

(12) # EUROPÄISCHE PATENTANMELDUNG

(21) Anmeldenummer: **83112052.2**

(22) Anmeldetag: **01.12.83**

(51) Int. Cl.³: **F 23 N 1/00,** F 23 B 7/00, G 01 G 11/08

(30) Priorität: **23.02.83 DE 3306224**

(43) Veröffentlichungstag der Anmeldung: **28.11.84**
**Patentblatt 84/48**

(84) Benannte Vertragsstaaten: **AT DE FR GB**

(71) Anmelder: **Buderus Aktiengesellschaft, Sophienstrasse 32-34, D-6330 Wetzlar (DE)**

(72) Erfinder: **Freitag, Hans, Fr.Ebert-Strasse 29, D-6301 Heuchelheim (DE)**
Erfinder: **Grebe, Gerhard, Schlossbergstrasse 9, D-6345 Eschenburg-Roth (DE)**

(74) Vertreter: **Benner, Alwin, Dipl.-Ing., Buderus Aktiengesellschaft ZA-Patentabteilung Postfach 1220, D-6330 Wetzlar (DE)**

(54) **Verfahren zur Mengenregelung von festen Brennstoffen und Vorrichtung zur Durchführung des Verfahrens.**

(57) Eine Wägeeinrichtung (6) in der Brennstoffzufuhr von Kesseln (5) teilt das ermittelte Fördergewicht als Regelgröße einem Mengenregler (8) mit, welcher den Austrag aus dem Vorratsbehälter (1) durch Beeinflussung von Austragsvorrichtungen (2, 3) verstellt. Als mögliche Störgrößen sind die Feuchte des Brennstoffes über einen Feuchte-Meßumformer (12) oder Meßwerte aus der Verbrennung über einen Regler (13) dem Mengenregler (8) aufzuschalten.

BUDERUS AKTIENGESELLSCHAFT
TP/F/St/EP 16-330

## Verfahren zur Mengenregelung von festen Brennstoffen und Vorrichtung zur Durchführung des Verfahrens

Die Erfindung betrifft ein Verfahren nach dem Oberbegriff des Patentanspruchs 1 und eine Vorrichtung zur Durchführung des Verfahrens.

Beschickungseinrichtungen in Feuerungsanlagen führen der Feuerung die notwendige Brennstoffmenge zu. Die Bemessung der Brennstoffmenge erfolgt dabei üblicherweise über das Fördervolumen. Ein bestimmtes Volumen wird einem Vorratsbehälter entnommen und über verschiedene Transportsysteme der Feuerung zugeführt. Mit einer solchen volumenabhängigen Brennstoffzufuhr werden dann gute Ergebnisse erzielt, wenn der feste Brennstoff immer in gleichmäßiger Struktur und mit gleichen oder zumindest ähnlichen Brennstoffeigenschaften vorliegt.

Je nach Brennstoffart können häufige und starke Schwankungen der Struktur und der Eigenschaften vorliegen. So kann insbesondere die Dichte des Brennstoffes stark schwanken. Holz kann beispielsweise als Sägemehl, in Form von Hobelspänen oder von Hackschnitzeln vorliegen, wobei jeweils unterschiedliche Dichten vorhanden sind. Auch andere Werte wie etwa die Feuchtigkeit sind Veränderungen unterworfen. Bei der bekannten volumenabhängigen Brennstoffzufuhr zur Feuerung werden diese unterschiedlichen Werte nicht berücksichtigt. Zumindest die Wirtschaftlichkeit der Feuerung kann dadurch beeinträchtigt werden.

Es soll ein Verfahren zur Mengenregelung von festen Brennstoffen in Feuerungsanlagen geschaffen werden, welches eine genauere Anpassung des Brennstoffangebotes und damit einen gleichmäßigeren Betrieb der Feuerung ermöglicht.

Gemäß der Erfindung erfolgt dieses durch die im Kennzeichen des Patentanspruches 1 genannten Maßnahmen.

Das Fördergewicht des Brennstoffes, welches durch geeignete Wägevorrichtung wie eine Bandwaage oder einen Prallplatte-Schüttgutmesser ermittelt wird, dient als Regelgröße. Somit ist erreicht, daß der wesentliche Störfaktor, nämlich die unterschiedliche Dichte des Brennstoffes, bei der Mengenregelung des Brennstoffes ausgeschaltet ist. Der Feuerung wird nicht ein festgelegtes Brennstoffvolumen sondern eine bestimmte Masse zugeführt. Diese Masse stellt einen genaueren Maßstab für den Brennwert des Brennstoffes dar als das Volumen.

Neben der unterschiedlichen Dichte des Brennstoffes können andere Störfaktoren vorhanden sein, z.B. die unterschiedliche Feuchtigkeit. Über einen Feuchtemesser läßt sich diese Störgröße ermitteln und dem Mengenregler aufschalten. Auch eine indirekte Ermittlung von Störfaktoren im Zustand des Brennstoffes ist möglich. So können Meßwerte aus der Verbrennung wie die Feuerraumtemperatur, der $CO_2$-Gehalt oder der $O_2$-Gehalt als Störgröße ermittelt und diese dem Mengenregler aufgeschaltet werden.

Es kann mit einem festen Sollwert des Fördergewichtes gearbeitet werden. Eine Mengenregelung mit gleitendem Sollwert, etwa mit lastabhängigem Sollwert, ist ebenfalls möglich.

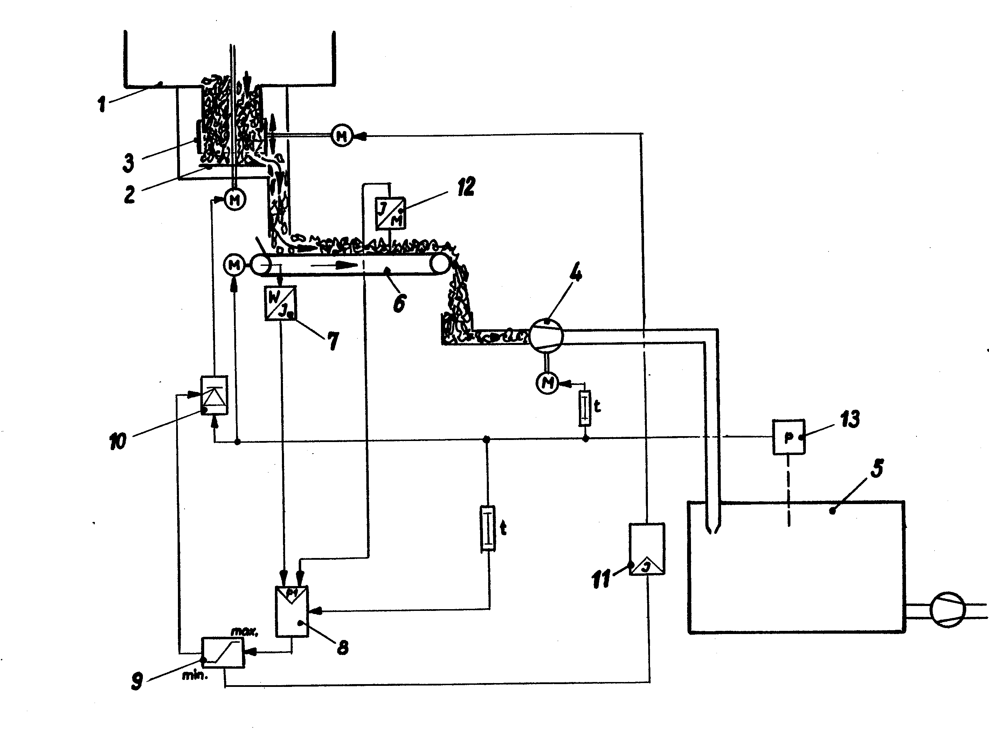

Die beigefügte Zeichnung stellt in einer einzigen Figur ein Regelschema der Brennstoffzufuhr als Ausführungsbeispiel der Erfindung dar.

Einem Vorratsbehälter 1 wird über Austragvorrichtungen, nämlich einen Drehzuteiler 2 und einen höhenverstellbaren Dosierring 3, eine veränderliche Menge an Brennstoff entnommen und durch eine Beschickungseinrichtung 4, hier als pneumatische Einrichtung ausgebildet, dem Kessel 5 zugeführt. In der Beschickungseinrichtung 4 ist eine Wägeeinrichtung 6 in Form einer Bandwaage angeordnet, welche ein bestimmtes Gewicht je Zeiteinheit ermittelt. Dieses Fördergewicht wird als Regelgröße über einen Meßumformer 7 einem Mengenregler 8 mitgeteilt, welcher über einen Begrenzer 9 einen Drehzahlregler 10 für den Antrieb des Drehzuteilers 2 steuert und falls dessen Veränderungsmöglichkeit nicht ausreicht, zusätzlich einen Dosierringregler 11 für das Höhenverstellen des Dosierringes 3 beeinflußt. Auf diese Weise ist garantiert, daß der Feuerung Brennstoff mit einem gewünschten Sollgewicht je Zeiteinheit zugeführt wird.

Da die Feuchte das Gewicht des Brennstoffes beeinflußt, wird diese durch einen geeigneten Fühler gemessen und über einen Meßumformer 12 als Störgröße dem Mengenregler 8 aufgeschaltet. Meßwerte aus der Verbrennung sind durch einen geeigneten Regler 13 dem Mengenregler 8 als Störgröße aufzuschalten. Zugleich dienen sie einer gleitenden Veränderung des Sollwertes durch direkte Beeinflussung des Drehzuteilers 2 der Wägevorrichtung 6 und der Beschickungseinrichtung 4.

BUDERUS AKTIENGESELLSCHAFT
TP/F/St/EP 16-330

## Patentansprüche

1. Verfahren zur Mengenregelung von festen Brennstoffen in der Brennstoffzufuhr zu Feuerungsanlagen, dadurch gekennzeichnet, daß eine Wägeeinrichtung (6) das Fördergewicht des Brennstoffes ermittelt und dieses als Regelgröße einem Mengenregler (8) mitteilt und daß der Mengenregler (8) das Fördergewicht durch Verstellen des Austrags aus einem Vorratsbehälter (1) auf einen gewünschten Sollwert hin verändert.

2. Verfahren nach Anspruch 1, dadurch gekennzeichnet, daß die Brennstoffeuchte als Störgröße ermittelt und diese als zusätzliche Regelgröße dem Mengenregler aufgeschaltet wird.

3. Verfahren nach Anspruch 1, dadurch gekennzeichnet, daß Meßwerte aus der Verbrennung wie Feuerraumtemperatur, $CO_2$-Gehalt oder $O_2$-Gehalt als Störgröße ermittelt und diese als zusätzliche Regelgröße dem Mengenregler aufgeschaltet wird.

4. Verfahren nach den Ansprüchen 1 bis 3, gekennzeichnet durch eine Mengenregelung mit festem Sollwert des Fördergewichtes.

5. Verfahren nach den Ansprüchen 1 bis 3, gekennzeichnet durch eine Mengenregelung mit gleitendem Sollwert des Fördergewichtes.

6. Vorrichtung zur Durchführung des Verfahrens nach Anspruch 1, gekennzeichnet durch eine einer Beschickungseinrichtung (4) zugeordnete Wägeeinrichtung (6) zur Ermittlung des Fördergewichtes des Brennstoffes, und einen Mengenregler (8) zum Verstellen von Austragvorrichtungen (2,3) am Vorratsbehälter (1).

7. Vorrichtung nach Anspruch 6, dadurch gekennzeichnet, daß die Wägeeinrichtung als Bandwaage ausgebildet ist.

8. Vorrichtung nach Anspruch 6, dadurch gekennzeichnet, daß die Wägeeinrichtung als Prallplatte-Schüttgutmesser ausgebildet ist.

0126182

| | EINSCHLÄGIGE DOKUMENTE | | EP 83112052.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| Y | <u>GB - A - 1 012 885</u> (DINGLERWERKE)<br>* Gesamt *<br><br>-- | 1,4,6, 7 | F 23 N 1/00<br>F 23 B 7/00<br>G 01 G 11/08 |
| Y | <u>DE - B - 1 449 469</u> (N.V. PHILIPS)<br>* Gesamt *<br><br>-- | 1,4,6, 7 | |
| A | <u>DE - B - 1 011 564</u> (EULE)<br>* Spalte 1, Absatz 1 *<br><br>-- | 1,3 | |
| A | <u>GB - A - 2 021 252</u> (PPT-PYROLYSE)<br>* Patentanspruch 1 *<br><br>---- | 1,3 | |

| RECHERCHIERTE SACHGEBIETE (Int. Cl. ³) |
|---|
| F 23 B 7/00<br>F 23 N 1/00<br>F 23 N 5/00<br>F 23 K 3/00<br>G 01 G 11/00<br>G 01 G 19/00<br>G 05 D 7/00 |

Der vorliegende Recherchenbericht wurde für alle Patentansprüche erstellt.

| Recherchenort | Abschlußdatum der Recherche | Prüfer |
|---|---|---|
| WIEN | 09-08-1984 | TSCHÖLLITSCH |